# EUROPÄISCHE PATENTSCHRIFT

(11) **EP 2 620 683 B1**
(45) Veröffentlichungstag und Bekanntmachung des Hinweises auf die Patenterteilung: **04.03.2015**
(21) Anmeldenummer: 12152277.5
(22) Anmeldetag: 24.01.2012
(51) Int. Cl.: F16L 11/11

(54) **Verbundrohr für Klima- und Lüftungstechnik**
Composite pipe for air conditioning and ventilation technology
Tuyau composite pour la technique de climatisation et d'aération

(43) Veröffentlichungstag der Anmeldung: 31.07.2013
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Schneck & Hübner Patentanwälte Rechtsanwälte PartGmbB

(56) Entgegenhaltungen:
- EP-A1- 2 072 988
- EP-A1- 2 131 114
- EP-A2- 0 563 575
- EP-A2- 1 911 565
- EP-B1- 1 724 508

## Beschreibung

Die Erfindung betrifft ein Verbundrohr nach dem Oberbegriff des Anspruches 1.

Aus der EP 1 911 565 A2 ist ein derartiges Verbundrohr bekannt, bei dem alle Wellenberge des Außenrohres gleich ausgebildet sind und bei dem alle zwischen den Wellenbergen befindlichen Wellentäler des Außenrohres durchgehend über den gesamten Umfang mit dem Innenrohr verschweißt sind. Insbesondere dann, wenn derartige ovale Verbundrohre verhältnismäßig breit ausgebildet sind, wenn also das Verhältnis der Länge der großen Haupt-Achse zur Länge der kleinen Haupt-Achse groß ist, ist die Flexibilität bei einer Biegung um die kurze Haupt-Achse nicht ausreichend. Eine Biegung ist nur mit hohem Kraftaufwand möglich und führt gegebenenfalls zu einem Aus- oder Einknicken des Verbundrohres. Die Konsequenz ist, dass derartige Verbundrohre nur mit einem verhältnismäßig großen Biegeradius verlegt werden können.

Aus der EP 1 724 508 B1 ist ein Verbundrohr der eingangs genannten Art bekannt, bei dem die Wellenberge ebenfalls gleich ausgebildet sind und bei dem die zwischen den Wellenbergen liegenden Wellentäler durchgehend mit dem Innenrohr verschweißt sind. Um die Biegsamkeit des Rohres zu erhöhen, ist das Innenrohr so ausgestaltet, dass es bei einer Biegung des Rohres jeweils in die Wellenberge hinein ausbeult. Zur Erhöhung der Biegsamkeit sind die Wellenberge jeweils an ihrem Außenumfang mittig mit Rillen versehen.

Aus der EP 2 131 114 ist ein Verbundrohr bekannt, das ebenfalls für die Klima- und Lüftungstechnik vorgesehen ist. Es weist einen ebenen Bodenbereich und einen darüber liegenden bogenförmig nach außen vorgewölbten Deckenwandungsbereich auf, wobei ausgewölbte Seitenwandungen vorgesehen sind.

Aus der EP 2 072 988 A1 ist ein weiteres Verbundrohr bekannt.

Der Erfindung liegt die Aufgabe zugrunde, ein Verbundrohr der gattungsgemäßen Art so auszugestalten, dass es auch dann, wenn es relativ breit ausgebildet ist, mit relativ engem Krümmungsradius um die kleine Haupt-Achse gebogen werden kann.

Diese Aufgabe wird erfindungsgemäß bei einem Verbundrohr nach dem Oberbegriff des Anspruches 1 durch die Merkmale im Kennzeichnungsteil des Anspruches 1 gelöst. Der Kern der Erfindung liegt darin, dass die Verschweißung von Wellentälern in den beiden außen liegenden Bereichen, in denen die große Haupt-Achse die gekrümmten Wand-Abschnitte schneidet, zumindest teilweise unterbrochen ist. Durch den dadurch verbreiterten Wellenberg wird noch eine flexible Zone zum Dehnungsausgleich geschaffen, die beim Biegen des Verbundrohres im äußeren Krümmungsbereich gedehnt wird, während sie im inneren Krümmungsbereich gestaucht wird. Unter oval im Sinne der Erfindung wird zum einen verstanden, dass zwei zueinander parallele, also ebene Wand-Abschnitte vorhanden sind, die durch gekrümmte Wand-Abschnitte, vorzugsweise halbzylindrisch gekrümmte Wand-Abschnitte, miteinander verbunden sind. Es wird aber auch hierunter verstanden, dass eine echte Ellipse vorliegt, bei der also alle Wand-Abschnitte gekrümmt sind. Es wird hierunter aber auch verstanden, dass einander gegenüberliegende Wand-Abschnitte unterschiedlich ausgebildet sind.

Die Unteransprüche geben vorteilhafte und zumindest zum Teil erfinderische Ausgestaltungen wieder.

Weitere Merkmale, Vorteile und Einzelheiten der Erfindung ergeben sich aus der nachfolgenden Beschreibung von Ausführungsbeispielen anhand der Zeichnungen. Es zeigen
- Figur 1: einen Abschnitt eines Rohres nach der Erfindung in einer Seiten-Längs-Ansicht in unverbogenem Zustand,
- Figur 2: einen Querschnitt durch das Rohr gemäß der Schnittlinie II-II in Figur 1,
- Figur 3: einen Querschnitt durch das Rohr gemäß der Schnittlinie III-III in Figur 1,
- Figur 4: einen Teil-Längs-Schnitt durch eine Wand des Rohres gemäß der Schnittlinie IV-IV in den Figuren 1 und 2,
- Figur 5: einen Teil-Längs-Schnitt durch eine Wand des Rohres gemäß der Schnittlinie V-V in den Figuren 1 und 3,
- Figur 6: eine Ansicht des Rohres gemäß Figur 1 in gebogenem Zustand,
- Figur 7: einen Teil-Längs-Ausschnitt VII aus dem äußeren Krümmungsbereich des gebogenen Rohres nach Figur 6,
- Figur 8: einen Teil-Längs-Ausschnitt VIII aus dem inneren Krümmungsbereich des gebogenen Rohres nach Figur 6,
- Figur 9: eine gegenüber den Figuren 1 bis 8 abgewandelte Ausführungsform des Rohres,
- Figur 10: einen Querschnitt durch das Rohr gemäß der Schnittlinie X-X in Figur 9,
- Figur 11: einen Querschnitt durch das Rohr gemäß der Schnittlinie XI-XI in Figur 9,
- Figur 12: einen Figur 5 entsprechenden Teil-Längs-Schnitt einer abgewandelten Ausführungsform des Rohres,
- Figur 13: einen ebenfalls Figur 5 entsprechenden Teil-Längs-Schnitt durch eine weitere abgewandelte Ausführungsform des Rohres und
- Figur 14: ein Rohr nach der Erfindung mit elliptischem Querschnitt in schematischer Darstellung.

Das in der Zeichnung dargestellte Verbundrohr weist einen ovalen Querschnitt auf. Im konkreten Fall wird dieser ovale Querschnitt durch zwei zueinander parallele Wand-Abschnitte 1, 2 und zwei diese miteinander zu einem geschlossenen Querschnitt verbindende halbzylindrische Wand-Abschnitte 3, 4 ergänzt bzw. gebildet. Das Rohr weist eine große Haupt-Achse 5 mit einer Länge a und eine kleine Haupt-Achse 6 mit einer Länge b auf, wobei die Längen a und b jeweils auf den Außenquerschnitt des Rohres bezogen sind. Für das Verhältnis der Länge a der großen Achse 5 zu der Länge b der kleinen Achse 6 gilt: 1,5 ≤ a/b ≤ 5,0.

Das Rohr ist als Verbundrohr, d. h. als doppelwandiges Wellrohr ausgebildet, das aus einem im Wesentlichen glatten Innenrohr 7 und einem gewellten Außenrohr 8 gebildet ist. Das Innenrohr 7 wird durch zwei zueinander parallele ebene Innenwand-Abschnitte 9, 10 und zwei diese verbindende halbzylindrische Innenwand-Abschnitte 11, 12 gebildet, die das insoweit einteilige Innenrohr 7 bilden. Das Innenrohr 7 begrenzt einen StrömungsKanal 13 für den Transport von Gas, insbesondere von Luft, in Klima- bzw. Lüftungs-Anlagen.

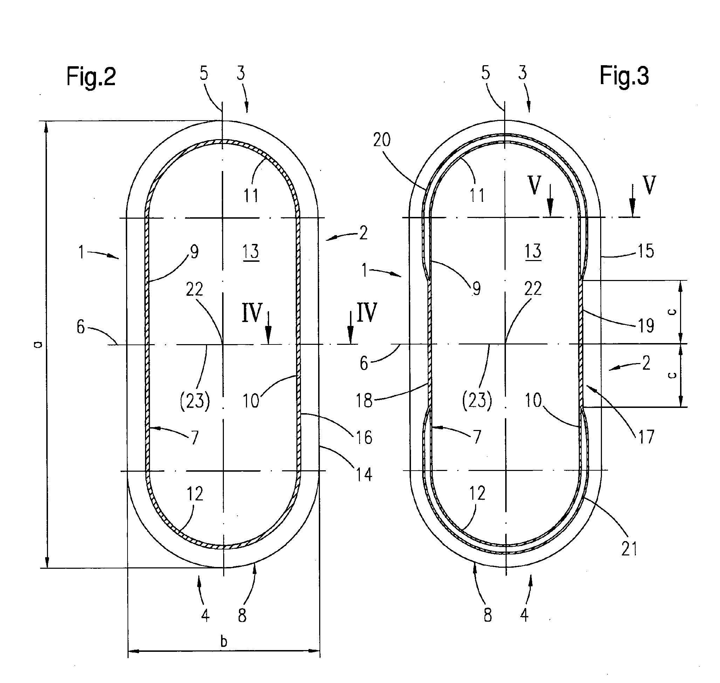

Das Außenrohr 8 ist als Wellrohr ausgebildet, d. h. es besteht im Wesentlichen aus aufeinander folgenden Wellenbergen 14, 15. Zwischen jeweils zwei einander benachbarten Wellenbergen 14, 15 ist ein Wellental 16 ausgebildet, das den Fuß zweier benachbarter Wellenberge 14, 15 bildet und das durchgehend über den Umfang der Rohre mit dem Innerohr 7 verschweißt ist, wie insbesondere aus den Figuren 2 bis 5 hervorgeht.

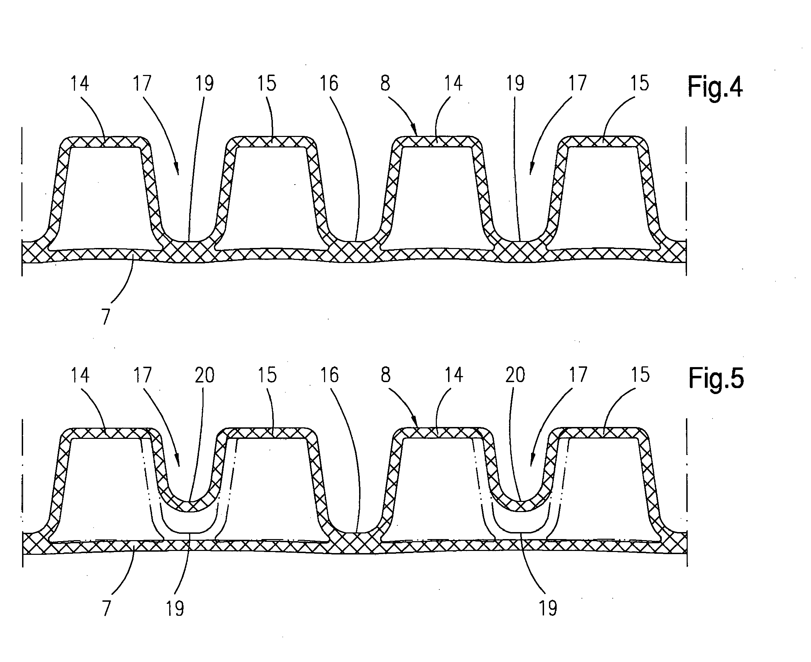

Zwischen zwei vollständig über den gesamten Umfang des Rohres mit dem Innenrohr 7 verschweißten Wellentälern 16 des Außenrohres 8 ist zwischen zwei benachbarten Wellenbergen 14, 15 jeweils ein Wellental 17 ausgebildet, das nur teilweise mit dem Innenrohr 7 verschweißt ist. Im Bereich der zueinander parallelen Wand-Abschnitte 1, 2 weist das Wellental 17 ebenfalls zueinander parallele Wellental-Abschnitte 18, 19 auf, die mit dem im Wesentlichen glattwandigen Innenrohr 7 verschweißt sind, wie Figur 4 unmittelbar entnehmbar ist und in Figur 5 angedeutet ist. Jeder Wellental-Abschnitt 18 bzw. 19 ist spiegelsymmetrisch zur kleinen Achse 6 ausgebildet, erstreckt sich also um die gleiche Strecke c von der kleinen Achse 6 zum gebogenen Wand-Abschnitt 3 bzw. 4 hin. Hieraus ergibt sich auch bereits, dass die einander gegenüber liegenden Wellental-Abschnitte 18 und 19 spiegelsymmetrisch zur großen Achse 5 ausgebildet sind.

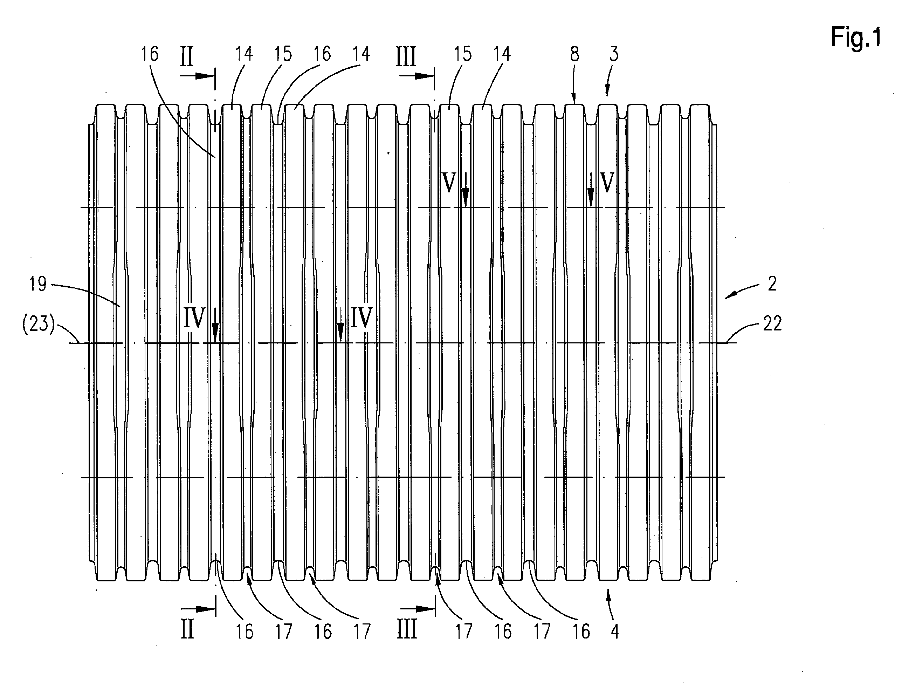

Die beiden einander parallelen Wellental-Abschnitte 18, 19 werden jeweils durch zwei nicht mit dem Innenrohr 7 verschweißte Wellental-Abschnitte 20, 21 miteinander verbunden, was insbesondere den Figuren 3 und 5 entnehmbar ist. Die Wellental-Abschnitte 20, 21erstrecken sich über die halbzylindrischen Wand-Abschnitte 3, 4 und noch - wie Figur 3 und auch Figur 1 entnehmbar ist - über einen anschließenden Teil-Bereich der zueinander parallelen Wand-Abschnitte 1, 2.

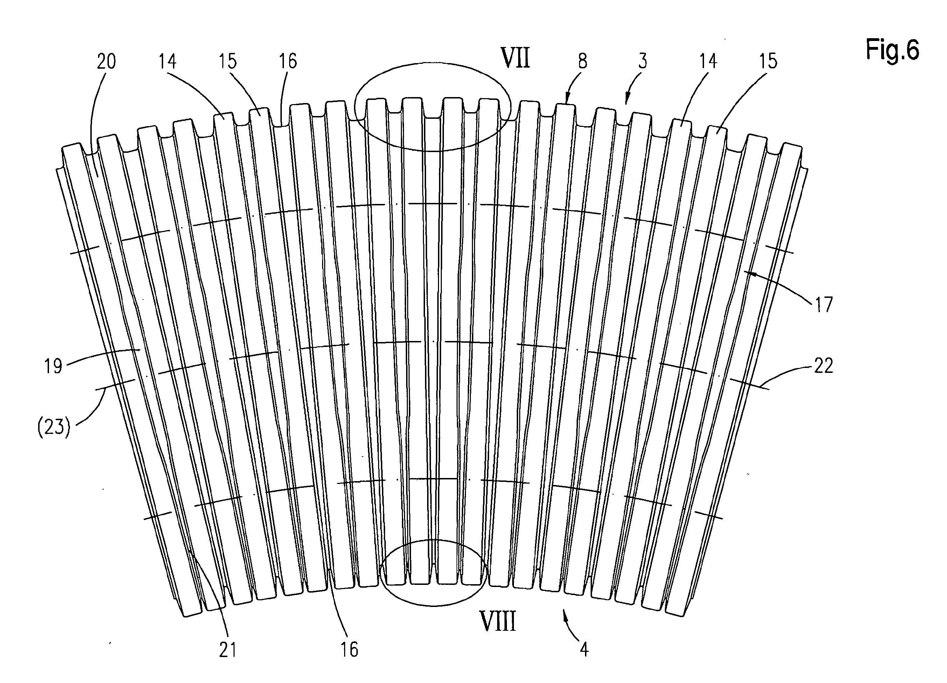

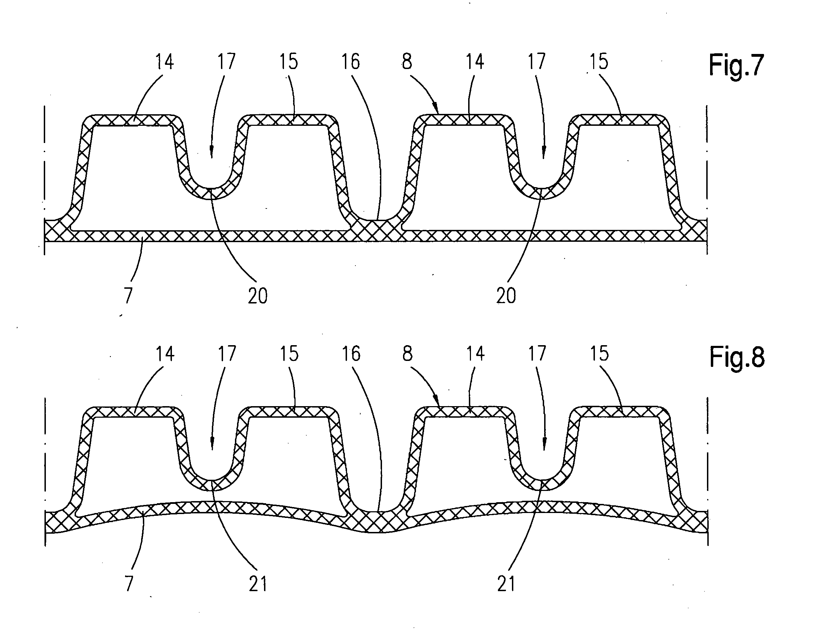

Durch die geschilderte Ausgestaltung ist das Rohr bei guter Scheiteldruckfestigkeit um seine Mittel-Längs-Achse 22 biegsam, die durch die Schnittlinien der großen Achsen 5 und der kleinen Achsen 6 gebildet wird. Die erwähnte und in Figur 6 dargestellte Biegung erfolgt um die Achse 22 in der durch die kleinen Achsen 6 definierten Ebene 23. Wie Figur 7 entnehmbar ist, wird hierbei im äußeren Krümmungsbereich das gemäß Figur 4 in unverbogenem Zustand des Rohres ganz leicht in die Wellenberge 14, 15 eingewölbte Innenrohr 7 gestreckt respektive plastisch verformt. Gegebenenfalls werden auch die nicht mit dem Innenrohr 7 verschweißten Wellental-Abschnitte 20 geringfügig in Längsrichtung des Rohres gestreckt, wie insbesondere Figur 6 entnehmbar ist.

Demgegenüber wird der im inneren Krümmungsbereich liegende Teil des Rohres zusammengedrückt. Wie Figur 8 entnehmbar ist, wird hierbei das Innerohr 7 Undefiniert ausgebeult. Des Weiteren werden - wie insbesondere Figur 6 entnehmbar ist - die jeweils benachbarten Wellenberge 14, 15 aufeinander zu geschoben, die Wellental-Abschnitte 21 also ebenfalls entsprechend verformt.

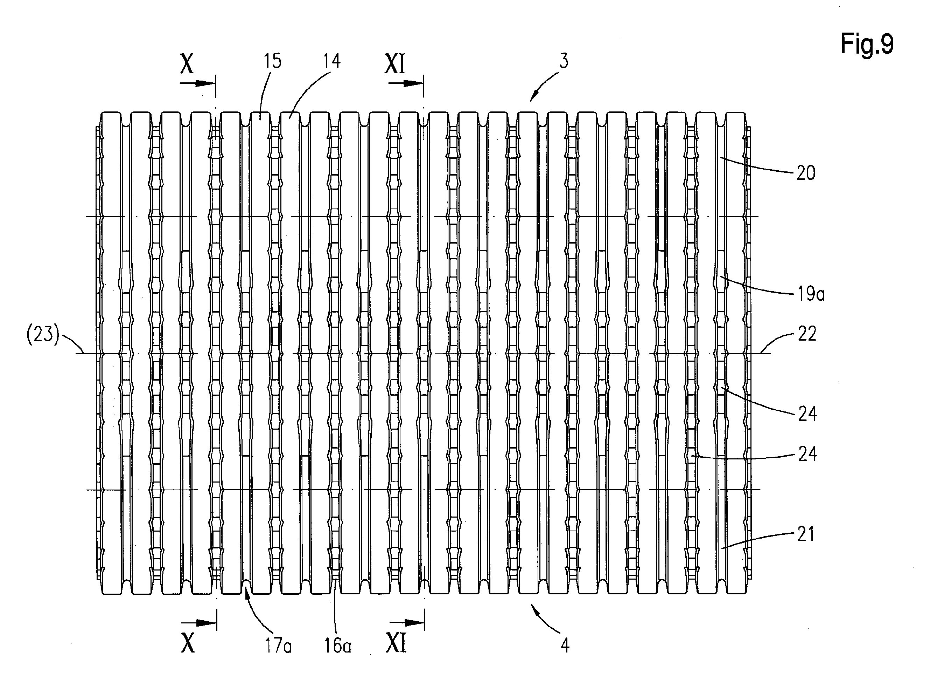

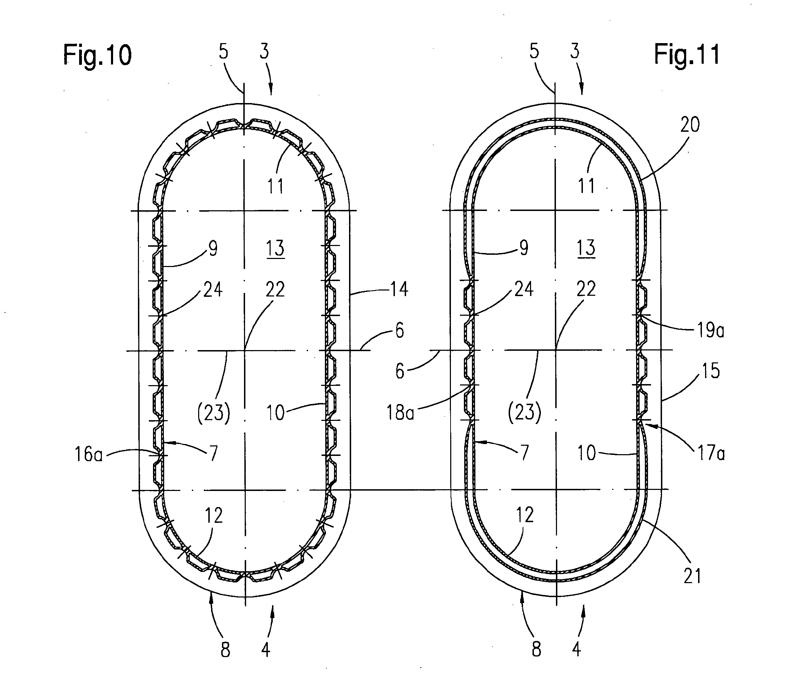

Die Figuren 9 bis 11 zeigen eine Variante, die sich nur dadurch von der zuvor beschriebenen Ausführung unterscheidet, dass anstelle der durchgehend mit dem Innenrohr 7 verschweißten zueinander parallelen Wellental-Abschnitte 18, 19 Wellental-Abschnitte 18a bzw. 19a des Wellentales 17a vorgesehen sind, die nur punktweise bzw. über kurze Abschnitts-Bereiche 24 mit dem Innenrohr 7 verschweißt sind. Auch die über den gesamten Umfang mit dem Innenrohr 7 verschweißten Wellentäler 16a sind nur punktweise bzw. über kurze Abschnitts-Bereiche 24 mit dem Innenrohr 7 verschweißt.

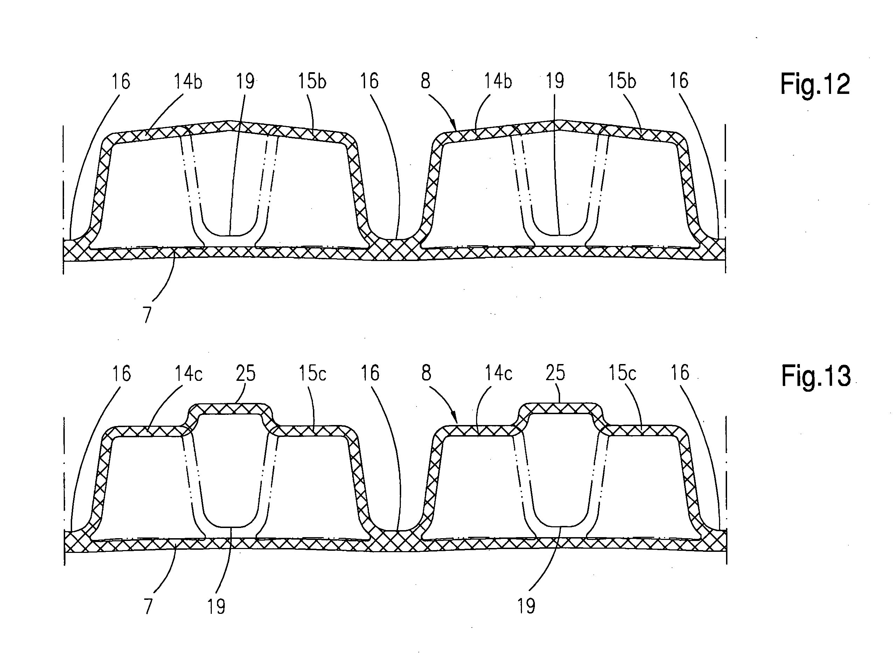

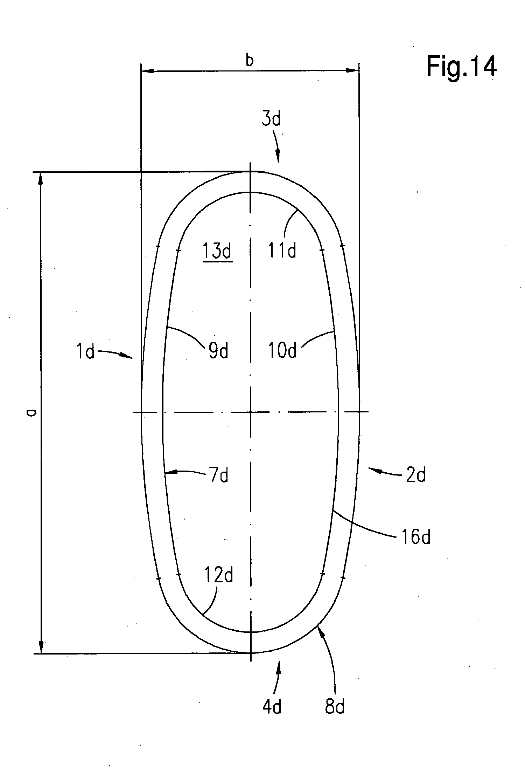

In den Figuren 12 und 13 sind abgewandelte Wellenberge dargestellt. Sie weisen nach wie vor Wellentäler 16 auf, wie sie in Figur 2 und 4 dargestellt sind. In den Bereichen, in denen die Wellental-Abschnitte 18, 19 mit dem Innenrohr 7 verschweißt sind, sind sie entsprechend der Ausgestaltung nach Figur 3 und 4 ausgebildet. In den Bereichen, in denen nur die Wellentäler 16 mit dem Innenrohr 5 verschweißt sind, wie es in Figur 5 für die Wand-Abschnitte 3, 4 dargestellt ist, sind die Wellental-Abschnitte 18, 19 geringerer Tiefe vollständig entfallen. Anstelle dessen sind bei der Ausgestaltung nach Figur 12 die Wellenberge 14b und 15b leicht dachförmig nach außen gewölbt und gehen direkt ineinander über. Bei der Ausgestaltung nach Figur 13 weisen die Wellenberge 14c und 15c jeweils einen sie verbindenden nach außen ausgewölbten, rinnenförmigen Vorsprung 25 auf. Durch diese Ausgestaltungen können beim Biegen des Rohres die Wellenberge 14b, 15b bzw. 14c, 15c im äußeren Krümmungsbereich gestreckt und/oder im inneren Krümmungsbereich nach außen ausgebeult werden. Im Übrigen kann auf die vorhergehende Beschreibung verwiesen werden. In Figur 14 ist ein Verbundrohr mit ovalem Querschnitt dargestellt, der im Wesentlichen elliptisch ist. Die großen Wand-Abschnitte 1d, 2d haben einen teilkreisförmigen Querschnitt mit sehr großem Krümmungsradius; sie sind also nicht parallel zueinander, sondern spiegelsymmetrisch zur großen Achse 5 ausgebildet. Die kleinen Wand-Abschnitte 3d, 4d haben einen teilkreisförmigen Querschnitt und sind ebenfalls spiegelsymmetrisch zur kleinen Achse 6 angeordnet. Das Innenrohr 7d und das Außenrohr 8d haben einen entsprechenden Querschnitt. Gleiches gilt für die Wellenberge 14d und die Wellentäler 16d.

Die Zuordnung und Ausgestaltung von den Wellentälern 17 entsprechenden Wellentälern entspricht der obigen Beschreibung. Alle im Übrigen mit der vorherigen Beschreibung funktionell gleichen aber konstruktiv anderen Teile werden mit der selben Bezugsziffer unter einem hinzugefügten d bezeichnet, wobei auf die vorherige Beschreibung verwiesen werden darf.

Die Herstellung der geschilderten Rohre erfolgt in der für gewellte Verbundrohre üblichen Art und Weise, wie sie beispielsweise in der EP 0 563 575 C (entsprechend US-Patent 5,320,797) dargestellt und beschrieben ist.

## Patentansprüche

1. Verbundrohr für Klima- und Lüftungstechnik
- mit einem ovalen Querschnitt
-- mit einander gegenüberliegenden ersten Wand-Abschnitten (1, 2; 1d, 2d)
-- mit die ersten Wand-Abschnitte (1, 2; 1d, 2d) miteinander verbindenden, einander gegenüberliegenden zweiten Wand-Abschnitten (3, 4; 3d, 4d)
-- mit einer kleinen Haupt-Achse (6), die die ersten Wand-Abschnitte (1, 2; 1d, 2d) durchdringt und
-- mit einer großen Haupt-Achse (5), die die zweiten Wand-Abschnitte (3, 4; 3d, 4d) durchdringt
- mit einem gewellten Außenrohr (8; 8d), das
-- Wellenberge (14, 15; 14a, 15a; 14b, 15b; 14c, 15c; 14d) und
-- jeweils zwischen einander unmittelbar benachbarten Wellenbergen (14, 15; 14a, 15a; 14b, 15b; 14c, 15c) erste Wellentäler (16; 16a; 16d)
aufweist,
--- wobei die ersten Wellentäler (16; 16a; 16d) über den Umfang des Verbundrohres mit dem Innenrohr (7; 7d) verschweißt sind,
**dadurch gekennzeichnet,**
**dass** zwischen benachbarten Wellenbergen (14, 15; 14a, 15a; 14b, 15b; 14c, 15c; 15d) und zwischen den ersten Wellentälern (16;16a; -16d) an den ersten Wand-Abschnitten (1, 2; 1d, 2d) erste Wellental-Abschnitte (18, 19; 18a, 19a) ausgebildet sind, die nur im Bereich der ersten Wand-Abschnitte (1, 2; 1d, 2d) mit dem Innenrohr (7; 7d) verschweißt sind.

2. Verbundrohr nach Anspruch 1, **dadurch gekennzeichnet,**
**dass** die ersten Wand-Abschnitte (1, 2; 1d, 2d) spiegelsymmetrisch zur großen Haupt-Achse (5) ausgebildet sind und/oder dass die zweiten Wand-Abschnitte (3, 4; 3d, 4d) spiegelsymmetrisch zur kleinen Haupt-Achse (6) ausgebildet sind.

3. Verbundrohr nach Anspruch 1 oder 2, **dadurch gekennzeichnet,**
**dass** die zweiten Wand-Abschnitte (3, 4; 3d, 4d) gekrümmt ausgebildet sind.

4. Verbundrohr nach einem der Ansprüche 1 bis 3, **dadurch gekennzeichnet,**
**dass** die ersten Wellental-Abschnitte (18, 19; 18a, 19a) gekrümmt ausgebildet sind.

5. Verbundrohr nach einem der Ansprüche 1 bis 3, **dadurch gekennzeichnet,**
**dass** die ersten Wand-Abschnitte (1, 2) und die ersten Wellental-Abschnitte (18, 19; 18a, 19a) parallel zueinander und zur großen Haupt-Achse (5) ausgebildet sind.

6. Verbundrohr nach einem der Ansprüche 1 bis 5, **dadurch gekennzeichnet,**
**dass** die ersten Wellental-Abschnitte (18, 19; 18a, 19a) Teil von zweiten Wellentälern (17, 17a) sind, wobei die ersten Wellental-Abschnitte (18, 19; 18a, 19a) durch zweite Wellental-Abschnitte (20, 21) miteinander verbunden sind, die im Bereich der zweiten Wand-Abschnitte (3, 4) angeordnet sind.

7. Verbundrohr nach einem der Ansprüche 1 bis 6, **dadurch gekennzeichnet,**
**dass** die ersten Wellentäler (16) und/oder die ersten Wellental-Abschnitte (18, 19) durchgehend mit dem Innenrohr (7) verschweißt sind.

8. Verbundrohr nach einem der Ansprüche 1 bis 6, **dadurch gekennzeichnet,**
**dass** die ersten Wellentäler (16a) und/oder die ersten Wellental-Abschnitte (18a, 19a) nur in Abschnitts-Bereichen (24) mit dem Innenrohr (7) verschweißt sind.

9. Verbundrohr nach einem der Ansprüche 1 bis 8, **dadurch gekennzeichnet,**
**dass** die ersten Wellental-Abschnitte (18, 19; 18a, 19a) symmetrisch zur Durchdringung der kleinen Haupt-Achse (6) durch die ersten Wand-Abschnitte (1, 2) ausgebildet sind.

10. Verbundrohr nach einem der Ansprüche 1 bis 9, **dadurch gekennzeichnet,**
**dass** die ersten Wellental-Abschnitte (18, 19; 18a, 19a) sich nur über einen Teilbereich der ersten Wand-Abschnitte (1, 2) erstrecken.

11. Verbundrohr nach einem der Ansprüche 1 bis 5 und 7 bis 10, **dadurch gekennzeichnet,**
**dass** benachbarte Wellenberge (14b, 15b; 14c, 15c) im Bereich der zweiten Wand-Abschnitte (3, 4) direkt ineinander übergehen und nach außen gewölbt sind.

12. Verbundrohr nach einem der Ansprüche 1 bis 11, **dadurch gekennzeichnet,**
**dass** für das Verhältnis der Länge a der großen Haupt-Achse (5) zur Länge b der kleinen Haupt-Achse (6) gilt: 1,5 ≤ a/b ≤ 5,0.

## Claims

1. Composite pipe for air conditioning and ventilation technology, comprising
- an oval cross-section
-- with first wall portions (1, 2; 1d, 2d) arranged opposite to each other;
-- with second wall portions (3, 4; 3d, 4d) arranged opposite to each other for interconnecting the first wall portions (1, 2; 1d, 2d);
-- with a short main axis (6) penetrating the first wall portions (1, 2; 1d, 2d); and
-- with a large main axis (5) penetrating the second wall portions (3, 4; 3d, 4d);
- a corrugated external pipe (8; 8d) which has
-- peaks (14, 15; 14a, 15a; 14b, 15b; 14c, 15c; 14d); and
-- first troughs (16; 16a; 16d) which are in each case arranged between directly adjacent peaks (14, 15; 14a, 115a; 14b, 15b; 14c, 15c),
--- wherein the first troughs (16; 16a; 16d) are welded to the internal pipe (7; 7d) at the circumference of the composite pipe,
**characterised in**
**that** between adjacent peaks (14, 15; 14a, 15a; 14b, 15b; 14c, 15c; 15d) and between the first troughs (16; 16a; 16d), first trough portions (18, 19; 18a, 19a) are formed at the first wall portions (1, 2; 1d; 2d), the first trough portions (18, 19; 18a, 19a) being welded to the internal pipe (7; 7d) only in the region of the first wall portions (1, 2; 1d, 2d).

2. Composite pipe according to claim 1, **characterised in**
**that** the first wall portions (1, 2; 1d, 2d) are configured mirror-symmetrically to the large main axis (5) and/or
**that** the second wall portions (3, 4; 3d, 4d) are configured mirror-symmetrically to the short main axis (6).

3. Composite pipe according to claim 1 or 2, **characterised in that** the second wall portions (3, 4; 3d, 4d) are curved.

4. Composite pipe according to one of claims 1 to 3, **characterised in that** the first trough portions (18, 19; 18a, 19a) are curved.

5. Composite pipe according to one of claims 1 to 3, **characterised in that** the first wall portions (1, 2) and the first trough portions (18, 19; 18a, 19a) are parallel to each other and to the large main axis (5).

6. Composite pipe according to one of claims 1 to 5, **characterised in that** the first trough portions (18, 19; 18a, 19a) are part of second troughs (17, 17a), wherein the first trough portions (18, 19; 18a, 19a) are interconnected by second trough portions (20, 21) arranged in the region of the second wall portions (3, 4).

7. Composite pipe according to one of claims 1 to 6, **characterised in that** the first troughs (16) and/or the first trough portions (18, 19) are continuously welded to the internal pipe (7).

8. Composite pipe according to one of claims 1 to 6, **characterised in that** the first troughs (16a) and/or the first trough portions (18a, 19a) are welded to the internal pipe (7) only in partial regions (24).

9. Composite pipe according to one of claims 1 to 8, **characterised in that** the first trough portions (18, 19; 18a, 19a) are configured symmetrically for the penetration of the first wall portions (1, 2) by the short main axis (6).

10. Composite pipe according to one of claims 1 to 9, **characterised in that** the first trough portions (18, 19; 18a, 19a) extend only across a partial region of the first wall portions (1, 2).

11. Composite pipe according to one of claims 1 to 5 and 7 to 10, **characterised in**
**that** adjacent peaks (14b, 15b; 14c, 15c) directly overlap with each other in the region of the second wall portions (3, 4) and bulge outwardly.

12. Composite pipe according to one of claims 1 to 11, **characterised in that** the ratio of the length a of the large main axis (5) to the length b of the short main axis (6) is such that 1.5 ≤ a/b ≤ 5.0.

## Revendications

1. Tuyau composite pour la technique de climatisation et d'aération
- avec une section transversale ovale
-- comprenant des parties de parois primaires (1, 2 ; 1d, 2d) situées les unes en face des autres
-- comprenant des parties de parois secondaires (3, 4 ; 3d, 4d), situées les unes en face des autres, reliant les parties de parois primaires (1, 2 ; 1d, 2d) entre elles
-- comprenant un petit axe principal (6) qui traverse les parties de parois primaires (1, 2 ; 1d, 2d) et
-- comprenant un grand axe principal (5), qui traverse les parties de parois secondaires (3, 4 ; 3d, 4d)
- avec un tuyau externe (8 ; 8d) ondulé qui présente
-- des sommets d'ondulations (14, 15 ; 14a, 15a ; 14b, 15b ; 14c, 15c ; 14d) et
-- et des creux d'ondulations primaires (16 ; 16a ; 16d) chaque fois entre des sommets d'ondulations (14, 15 ; 14a, 15a ; 14b, 15b ; 14c, 15c) immédiatement voisins,
--- les creux d'ondulations primaires (16 ; 16a ; 16d) étant soudés avec le tuyau interne (7 ; 7d) sur le pourtour du tuyau composite,
**caractérisé en ce**
**qu'**entre les sommets d'ondulations (14, 15 ; 14a, 15a ; 14b, 15b, 14c, 15c ; 15d) voisins et entre les creux d'ondulations primaires (16 ; 16a ; 16d), des parties de creux d'ondulations primaires (18, 19 ; 18a, 19a) sont formées sur les parties de parois primaires (1, 2 ; 1d, 2d), qui sont soudées avec le tuyau interne (7 ; 7d) uniquement dans la zone des parties de parois primaires (1, 2 ; 1d, 2d).

2. Tuyau composite selon la revendication 1, **caractérisé en ce**
**que** les parties de parois primaires (1, 2 ; 1d, 2d) sont conçues symétriques comme dans un miroir par rapport au grand axe principal (5) et/ou
**que** les parties de parois secondaires (3, 4 ; 3d, 4d) sont conçues symétriques comme dans un miroir par rapport au petit axe principal (6).

3. Tuyau composite selon les revendications 1 ou 2, **caractérisé en ce**
**que** les parties de parois secondaires (3, 4 ; 3d, 4d) sont conçues de manière incurvée.

4. Tuyau composite selon l'une des revendications 1 à 3, **caractérisé en ce**
**que** les parties de creux d'ondulations primaires (18, 19 ; 18a, 19a) sont conçues de manière incurvée.

5. Tuyau composite selon l'une des revendications 1 à 3, **caractérisé en ce**
**que** les parties de parois primaires (1, 2) et les parties de creux d'ondulations primaires (18, 19 ; 18a, 19a) sont conçues parallèles les unes aux autres et par rapport au grand axe principal (5).

6. Tuyau composite selon l'une des revendications 1 à 5, **caractérisé en ce**
**que** les parties de creux d'ondulations primaires (18, 19 ; 18a, 19a) font partie de creux d'ondulations secondaires (17, 17a), les parties de creux d'ondulations primaires (18, 19 ; 18a, 19a) étant reliées entre elles par des parties de creux d'ondulations secondaires (20, 21), qui sont disposées dans la zone des parties de parois secondaires (3, 4).

7. Tuyau composite selon l'une des revendications 1 à 6, **caractérisé en ce**
**que** les creux d'ondulations primaires (16) et/ou les parties de creux d'ondulations primaires (18, 19) sont soudés avec le tuyau interne (7) sur toute la longueur.

8. Tuyau composite selon l'une des revendications 1 à 6, **caractérisé en ce**
**que** les creux d'ondulations primaires (16a) et/ou les parties de creux d'ondulations primaires (18a, 19a) ne sont soudés avec le tuyau interne (7) que dans des zones de parties (24).

9. Tuyau composite selon l'une des revendications 1 à 8, **caractérisé en ce**
**que** les parties de creux d'ondulations primaires (18, 19 ; 18a, 19a) sont conçues symétriques par rapport à la traversée du petit axe principal (6) par les parties de parois primaires (1, 2).

10. Tuyau composite selon l'une des revendications 1 à 9, **caractérisé en ce**
**que** les parties de creux d'ondulations primaires (18, 19 ; 18a, 19a) ne s'étendent que sur une zone partielle des parties de parois primaires (1, 2).

11. Tuyau composite selon l'une des revendications 1 à 5 et 7 à 10, **caractérisé en ce**
**que** des sommets d'ondulations voisins (14b, 15b ; 14c, 15c) s'emboîtent directement dans la zone des parties de parois secondaires (3, 4) et forment des voutes vers l'extérieur.

12. Tuyau composite selon l'une des revendications 1 à 11, **caractérisé en ce**
**Que**, pour le rapport entre la longueur a du grand axe principal (5) et la longueur b du petit axe principal (6), l'on ait 1,5 ≤ a/b ≤ 5,0.
